# EUROPEAN PATENT APPLICATION

(11) **EP 4 411 422 A1**
(43) Date of publication of application: **07.08.2024**
(21) Application number: 23155043.5
(22) Date of filing: 06.02.2023
(51) Int. Cl.: G01T 1/202

(54) **SCINTILLATION DEVICE**

(71) Applicant: BrightComSol GmbH, 1190 Wien (AT)
(72) Inventor: SHIRMARDI, Behzad, 1200 Wien (AT)
(74) Representative: SONN Patentanwälte GmbH & Co KG

(57) **Abstract**

The invention provides a scintillation device comprising a support that comprises microchannels and a composite of a metal halide scintillator with a solid polymeric matrix in said microchannels, wherein the solid polymeric matrix is transparent to electromagnetic radiation emitted by the metal halide scintillator; methods of producing and using the scintillation device.

## Description

The present inventio relates to the field of scintillation detector devices.

### Background

Radiation imaging, especially X-ray imaging, is the most common and widely used diagnostic technique for different applications, ranging from medical imaging to non-destructive testing, security, and inspection. X-ray radiography is currently performed primarily using either direct or indirect techniques, which involve the detection of charge carriers and photons generated by high-energy photons such as X-rays, respectively. Direct detectors are good for achieving high spatial resolution. However, charge trapping and defect-related challenges lower the sensitivity of these detectors. Due to the low atomic numbers of the semiconductors used in direct conversion detectors, the most successful large-area direct detectors such as amorphous selenium (a-Se) and silicon have low efficiencies for high X-ray energies. Indirect X-ray detectors with scintillating layers (such as Gd₂O₂S and columnar CsI(Tl)) have high decent quantum efficiency (DQE) and are the preferred detectors for X-ray imaging applications. Thinner scintillators provide decent spatial resolutions, but the lower thickness limits the detector sensitivity, resulting in higher X-ray dose requirements. A thicker scintillator made for higher X-ray absorption results in reduced spatial resolution due to lateral light scattering and spreading. Usually, to limit the spreading of the scintillation light, the thicknesses of these sensors are limited to about 500-700 um. For example, US 8,461,536 B2 describes a scintillator with columnar crystals of a scintillator that are created by gas phase deposition, having a thickness of 120 to 470 µm.

The issue of lowered resolution due to the lateral light spreading can be typically reduced in two ways: 1) producing a columnar layer of scintillator material, or 2) using a micro-pore array template filled with the scintillator material. In the first case, there is no real physical isolation between the adjacent columns of the scintillator, therefor the light guiding effect is not perfect and there is still some light spread from one column to the others, as in columnar CsI(Tl). In the second case, each pore is physically confined from the other, so that the crosstalk of the scintillation light between adjacent micro-pores can be reduced when generated photons moving in lateral directions are reflected or absorbed by the pore walls with or without a further coating of the pores.

Usually, the scintillator is introduced inside the micro-pores by using one of the following strategies:
The micro-pore template is filled with a melted scintillator at high temperatures. After filling the cavities, the excess scintillator on the sample surface is removed by mechanical polishing. An example of this method was reported by Hormozan: CsI(Tl) powder was melted inside a pore array mold consisting of SiO₂-coated wells (pores with a given depth and width) in a silicon plate at 620 °C [DOI:10.1118/1.4939258]. After the filling process, the excess layers of CsI on top of the samples were removed by polishing them with micro-finishing papers. Due to the capillary force, wells are filled very fast. In this approach, the filling is not complete due to the entrapment of air bubbles inside the pores. Filling the gaps under a vacuum is not possible since CsI sublimes before 600°C. To tackle this problem, the authors increased the filling time which triggered Tl activators to leave the CsI lattice, leading to light yield reduction [DOI:10.1109/TNS.2011.2177477]. Another example is reported by Jiang Tang and co-workers: the authors embedded Cs₃Cu₂I₅ scintillators into an anodic aluminum oxide (AAO) matrix via a hot-pressing method [DOI:10.1002/adom.202101194]. In this approach, pre-synthesized Cs₃Cu₂I₅ powder was melted on top of a thin AAO template, and the molten scintillator was hot-pressed to fill in the channels. Similar to the hot-melt method for making pixelated CsI(Tl), this method is not the best choice for making an even and thick scintillator layer.

Another approach is the precipitation/crystallization of the scintillator into the micro-pore array template from a solution of the scintillator or its precursors. This method requires several filling/solvent evaporation cycles to fill in the microcavities. Deck Jung and others reported flexible pixelated scintillators consisting of polyethylene (PE) microwells filled with gadolinium oxysulfide (Gadox) particles [DOI:10.1088/0960-1317/19/1/015014]. In this study, a solvent-based suspension of the Gadox scintillator was poured onto the PE microcavity arrays. After Gadox particles were sedimented into the microcavities, the solution remaining on the microstructure surface is removed by the doctor blade method, and the remaining solvent was evaporated. Due to the shrinkage of the Gadox cake inside the well caused by solvent evaporation, the precipitation-and-evaporation step is repeated until the microwells are filled with Gadox particles. Another drawback of this method is the over-deposition of the scintillator layer caused by imperfect doctor blading. Wallentin and others used free-standing thin AAO membranes as a template to grow nanowire metal halide scintillator, where the nanopores were open at both ends [DOI:10.1021/acsanm.1c03575]. In this study, the authors filled the AAO pores with a precursor solution (0.4 M CsPbBr₃ in DMSO) and heated the filled AAO at 70°C to remove the solvent to achieve a nanowire with a length of 15 um inside the 50-µm-thick AAO membrane. Similar to other solvent-based approaches, this method suffered from a limited filling factor, use of solvent, and multiple-step filling process. Due to the low thickness of AAO membranes and handling difficulties, the production of a thick scintillator layer in AAO is very challenging. In another study, Zhijun Zhang and others reported AAO membranes filled with metal halide nanocrystals (CsPbBr₃) with multiple steps of filling with nanocrystals and removing the solvent [DOI:10.1002/adom.202101297]. This method also has the limitation of incomplete filling of the pores. Amlan Datta and others were able to obtain a thick scintillator layer in a structured template, growing Li-(PEA)₂PbBr₄ scintillator crystals inside a 1.2 mm microcapillary plate, where the capillaries were open at both ends [DOI:10.1038/s41598-021-02378-w]. The crystals were formed inside the capillary after the slow removal of the polar solvent. According to the previously reported article, this process may take at least one week [DOI:10.1039/D0TC05647B]. The authors did not mention the filling factor, however, from the previous research, this method should have the limitation of a lower filling factor due to the presence of the solvent during the filling process. Lack of filling efficiency would lead to a reduced brightness of the array.

Accordingly, there is a need for further scintillation layers with low side scattering/high resolution that can be manufactured more efficiently and quicker and/or with higher brightness or sensitivity.

### Summary of the Invention

The invention relates to a metal halide scintillator and a polymeric matrix in microchannels support, also termed templated (referring to the support structure) metal halide scintillator composite (referring to the mixture of the scintillator with a polymer matrix). Such a scintillator is suitable for high-resolution radiation detection. In particular, it can be used in a detector device for radiographic imaging.

In a primary aspect, the invention relates to a scintillation device comprising a support that comprises microchannels and a composite of a metal halide scintillator with a solid polymeric matrix in said microchannels. The solid polymeric matrix shall be transparent to electromagnetic radiation that is emitted by the metal halide scintillator.

In a related aspect, the invention provides a radiation detection device comprising a scintillation device according to the invention and an electromagnetic radiation detector for detecting emitted electromagnetic radiation of the metal halide scintillator of the scintillation device.

The invention further relates to a method of manufacturing a scintillation device according to the invention, comprising preparing a fluid mixture comprising a metal halide scintillator dispersed in a fluid polymer, fluid pre-polymer and/or fluid polymerizable monomers, filling said fluid mixture into microchannels of a support, and solidifying the fluid mixture in said microchannels.

The invention further provides a method of generating electromagnetic radiation, comprising providing a scintillation device of the invention, exciting the metal halide scintillator of the scintillation device to emit electromagnetic radiation.

Further provided is a method of detecting radiation, comprising providing a radiation detection device according to the invention, exciting the metal halide scintillator of the scintillation device to emit electromagnetic radiation, wherein exciting is with a radiation that is to be detected, and detecting the emitted electromagnetic radiation with the detector.

All these aspects and methods are related to each other and the following detailed description relates to all aspects, even if presented in connection with only one aspect or method. E.g. a description of a device also reads on a method of manufacturing said device in that the method is suitable to produce the device or provides it in a method step. A description of a use or detection method reads also on the device in that it shall be suitable or comprise means for such a use or method.

### Detailed description of the invention

The invention provides a scintillation device comprising a support that comprises microchannels. A further part of the device is a composite of a metal halide scintillator with a solid polymeric matrix. The composite is in said microchannels of the support.

During use, the metal halide scintillator composite scintillates in response to radiation. The microchannels reduce the diffusion of light from one microchannel to the others. This design enhances the sharpness of an image that can be detected adjacent to the support. This improves the resolution of radiographic imaging by minimizing lateral light scattering and spreading.

The solid polymeric matrix shall be transparent to electromagnetic radiation emitted by the metal halide scintillator, at least at the wavelength that is used for detection. "Transparent" means that enough light is passed through the matrix so that said detection provides an image. "Transparent" may be at least 50% transparent, preferably at least 60%, at least 70%, at least 80%, at least 90%, or at least 95%, transparent to emitted light by metal halide scintillator in the matrix. These % values are preferably also given for such light emitted through a thickness of 1 mm of the polymer.

The metal halide scintillator can be in form of microparticles or nanoparticles, such as a powder. The solid polymeric matrix immobilizes the metal halide scintillator in the microchannels. In the inventive manufacturing method, the fluid polymer precursor, such as monomers, or oligomers or a prepolymer disperses the metal halide scintillator and is used as medium to transport the metal halide scintillator to and into the microchannels. When solidified, in the solid polymeric matrix, the polymer is a supporting matrix that holds and potentially protects the metal halide scintillator. Accordingly, the fluid polymer precursor is used to fill the microchannels with the metal halide scintillator. The support has a plurality of microchannels and the microchannels may also be referred to as micro-pores. The plurality of microchannel forms an array of microchannels and a template for the composite that comprises the metal halide scintillator. The invention can also be described as a micro-pore array template filled with metal halide scintillators composite.

The microchannel (or micropores) are elongated volumes, i.e. channels with a (much) larger length than width. The microchannels form longitudinal volumes that can be filled with the composite. "Micro" in microchannel refers to the approximate size, which is in the µm and mm range. Preferably the microchannels have a length and a width perpendicular to the direction of the length, wherein the length is longer than the width. Preferably wherein the length is longer that the width by a factor of at least 2-times, at least 5-times, or at least 10-times, or even at least 50-times.

Preferably, the microchannels of the support are substantially parallel to each other. The length of the microchannels is in the parallel direction. The plurality of microchannels is preferably arranged side-by-side or stacked at the long side (with the length dimension).

Preferably, the plurality of microchannels or array comprises at least 20, especially preferred at least 100, even more preferred at least 1000, or especially preferred at least 10000, microchannels or micro-pores.

Preferably, the microchannels have a length of 50 µm to 20 cm, preferably 100 µm to 1 cm, even more preferred 200 µm to 5 mm, especially preferred 300 µm to 2 mm. The length and these length ranges may also be considered as the length of the micro-pores. Preferably, these ranges are also of the average length of the plurality of microchannels.

Combinable therewith, preferably the microchannels have an inner width of 1 µm to 50 mm, preferably 2.5 um to 10 mm, especially preferred 3 µm to 1 mm, even more preferred 5 µm to 500 pm, or even 7 µm to 300 µm. The inner with and these with ranges may also be considered as the diameter of the micro-pores. Preferably, these ranges are also of the average inner width of the plurality of microchannels.

Preferably, the support has a thickness of 50 µm to 20 cm, preferably 100 µm to 1 cm, even more preferred 200 µm to 5 mm, especially preferred 300 µm to 2 mm. The thickness of the support may correspond to the length of the microchannel/micro-pores. The microchannel may connect two opposing sides of the support, i.e. across the dimension of the thickness.

The microchannel may be separated from other microchannels of the plurality of microchannels by walls. The wall may also be considered as separators of the micro-pores. The support may comprise a wall grid that forms the microchannels. Preferably, the walls (in any of the above) have an average thickness of 1 µm to 500 pm, preferably 2 µm to 200 µm, especially preferred 3 µm to 100 pm, even more preferred 5 µm to 50 µm.

The shape of cross-section of the microchannels may be circular, elliptical, hexagonal, square, or triangular, for example, without being limited to these shapes. The above-mentioned width is a dimension in the cross-section with a perpendicular dimension in the cross-section being preferably within +/-50%, especially preferred within +/-30% of said width.

The shape of microchannels or micro-pores may be cylindrical (e.g. with an elliptic of circular base) or prismatic (e.g. with a hexagonal, square, or triangular base). The shape may be a circular cylinder or elliptical cylinder, e.g. a cylinder with a right section that is a circle or ellipse or other curved shape. The cross-section shape may be irregular.

The support may have the microchannels with an opening on at least one end, and preferably on two opposing ends (both ends), i.e. the ends at the end of the length dimension. This means that the material of the support is not covering the ends. In the inventive method, the open ends can be used to fill the polymeric matrix (in its fluid precursor form) into the microchannel. When - as is preferred - two opposing ends are open, the fluid can also exit the microchannels. This allows a complete filling without or few gas entrapment in the microchannels. The outflow should then be removed to provide a clean end, an end with the composite being filled up to the end but not extending outwards beyond the microchannel end. The composite is then flush with the end of the microchannel. The surface of the support with the microchannel ends may be covered later by a covering sheet. One or the two opposing ends may be covered by a covering sheet. The covering sheet may be with an absorbing or reflecting material for the emitted light of the metal halide scintillator (see below). A covering sheet with an absorbing or reflecting material for the emitted light shall only be on one end (side of the support) side but not on its opposing end (opposing side of the support), which is usually connected to a detector to detect the emitted light. Said connection shall convey the emitted light to the detector with little or no loss. Alternatively, there is no covering sheet and the composite contacts the surrounding at the end of the microchannels, at one or at two opposing ends of a microchannel. The microchannels are preferably not wells. There may be shrinkage of the polymer when transitioning from the fluid polymer precursor to the solid polymeric matrix. Thus, it may be that the composite ends flush on one end of a microchannel (e.g. when outflow was present and is removed) or the composite may be a little further inward from the end of the microchannel due to shrinkage. There may be one end of a microchannel with the composite ending flush at one end and an opposing end with the composite being further inward due to shrinkage. The recess of the composite from the flush end position due to shrinkage may be 5% or less, preferably 2% or less, more preferred 1% or less, even more preferred 0.5% or less. The %-values refer to the length of the composite in the microchannel, usually the length of the microchannel.

The above-mentioned shapes and dimensions of the microchannels may also correspond to the shape or dimensions of the composite of the metal halide scintillator with the solid polymeric matrix in said microchannels.

An example support is a porous glass, such as conventional supports with a surface of 5 × 5 cm², with a thickness of 1 mm (corresponding to the length of the microchannels), and a pore diameter of 10 µm (corresponding to the width of the microchannels).

The metal halide scintillator is preferably an inorganic material that absorbs radiation and emits electromagnetic radiation. If the absorbed radiation is also an electromagnetic radiation, then preferably the emitted electromagnetic radiation is of a longer wavelength than the absorbed electromagnetic radiation. A preferred metal halide scintillator is a perovskite (perovskite-type) crystal.

An example and preferred metal halide scintillator is selected from a compound of formula (**I**)

AₐM_{b}X_{c} (**I**),

wherein:
**A** represents one or more monovalent cations selected from Cs⁺, Rb⁺, K⁺, Na⁺, Li⁺, Tl⁺, ammonium, methylammonium, formamidinium, guanidinium, imidazolium, pyridinium, pyrrolidinium, protonated thiourea, or a mixture thereof;
**M** represents one or more metals selected from the group consisting of Pb²⁺, Ge²⁺, Sb²⁺, Te²⁺, Sn²⁺, Bi²⁺, Mn²⁺, Mn⁺, Cu²⁺, Cu⁺, In³⁺, Zn²⁺, Ag⁺, Au⁺_{'} or trivalent or bivalent rare earth ions, preferably of Ce, Tb, Eu, Sm, Yb, Dy, Tm ions; or a mixture thereof;
**X** represents one or more anions selected from the group consisting of F⁻, Cl⁻, Br⁻, I⁻, or a mixture thereof;
**a** is an integer from 1 to 4, such as 1, 2, 3, 4;
**b** is an integer of 1 or 2;
**c** is an integer from 3 to 9, such as 3, 4, 5, 6, 7, 8, 9.

Preferably, the compound is of sub-formula AMX₃ (II), A₃M₂X₅ (III), or A₂MX₃ (IV) or a mixture thereof; wherein A, M and X are defined as above. An especially preferred example is Cs₃Cu₂I₅. The metal halide scintillator may be doped with an ion, preferably with another metal or metalloid, that is different from the selected A and M. The doping ion can be from the lists of A and B of formula (I) or another ion. Preferably it is from the lists given above for formula (I) but different from A and B that are selected for the primary compound. Preferably, the doping ion has an oxidation state of +1. An example is Tl doped Cs₃Cu₂I₅ .

The metal halide may be a perovskite luminescent crystal as described in WO 2022/157279 A1 (incorporated herein by reference).

The metal halide scintillator may be in form of small crystals or particles, such as crystals or particles of an average size along their longest dimension of 2 nm to 200 pm, preferably 5 nm to 50 nm. The size may be determined by means of transmission electron microscopy (TEM).

The metal halide scintillator may be excited and induced to emit scintillation radiation by absorbing energy from ionizing radiation. Ionizing radiation is for example gamma rays, X-rays, and the higher energy ultraviolet part of the electromagnetic spectrum. One or several types of ionizing radiation may excite the metal halide scintillator, causing it to emit scintillation light. If the ionizing radiation is an electromagnetic radiation, then the scintillation light is of lower photon energy or lower frequency. Ionizing radiation may also be a nuclear radiation, such as alpha particles, beta particles, or neutrons.

Preferably, the metal halide scintillator has a Stokes shift of at least 50 nm, preferably at least 70 nm, even more preferred at least 100 nm, especially preferred at least 150 nm. A larger Stokes shift is preferred because it reduces self-absorption of the metal halide scintillator.

Preferably, the metal halide scintillator emits visible light or infrared, especially near infrared light. Particularly preferred, the metal halide scintillator emits radioluminescence (electromagnetic radiation) with a wavelength of 300 nm to 1200 nm, preferably of 350 nm to 1000 nm, more preferred of 400 nm to 800 nm, especially preferred of 420 nm to 700 nm. The emitted light is preferably selected to fit the detection range of an electromagnetic radiation detector, that may be combined with the scintillation device in a radiation detection device.

The present invention uses a composite of a metal halide scintillator with a solid polymeric matrix. Preferably, the amount of the metal halide scintillator in the composite is 0.0001 wt% to 95 wt%, preferably 1 wt% to 93.5 wt%, more preferred 10 wt% to 92 wt%, especially preferred 30 wt% to 91 wt%, even more preferred 50 wt% to 90 wt%. the metal halide scintillator in the composite is preferably at least 60 wt% or at least 70 wt%. These values may be combined with any upper limit of the previously mentioned ranges. An example is about 85 wt%.

Preferably, the solid polymeric matrix is a thermoplastic polymer, thermoset polymer, elastomer polymer or resin. When manufacturing the inventive scintillation device, fluid precursors of said polymer matrix is used, such as thermosetting mono- or oligomers for a thermoset polymer; or a solidifyable fluid resin or polymerizable resin precursors, as precursors for the solid resin; thermoplastic polymer precursor for the thermoplastic polymer; or elastomer precursor for the elastomer polymer. Precursors may be fluid pre-polymer and/or fluid polymerizable monomers, including fluid oligomers.

Examples of a polymerizable prepolymer include a polyester-acrylate, an epoxy-acrylate, a urethane acrylate and a polyol-acrylate. The pre-polymers may be used singly or in combination. Examples of a monomer include polymethylolpropane tri(meth)acrylate, hexanediol(meth)acrylate, tripropylene glycol di(meth)acrylate, diethylene glycol di(meth)acrylate, pentaerythritol tri(meth)acrylate, dipentaerythritol hexa(meth)acrylate, 1,6-hexanediol di(meth)acrylate, neopentyl glycol di(meth)acrylate, isobornyl acrylate, (1-methyl-1,2-ethanediyl)bis[oxy(methyl-2,1-ethanediyl)]diacrylate, 2-hydroxyethyl acrylate, or dipenyl-2,4,6-trimethylbenzoyl phosphine oxide.

The polymeric matrix of the composite may comprise, consist essentially of or consist of PDMS (polydimethylsiloxane), acrylate, acrylic resin, epoxy, epoxy resin, polyurethane, polystyrene, polysilicone, polysiloxane, olefinic copolymer, e.g. cyclic olefinic copolymer, or combinations thereof. The fluid pre-polymer may composite, may comprise or consist of the same materials or precursors thereof; if the precursor is or comprises a polymer than the molecular mass or polymerization degree shall be low enough for the polymer to remain fluid. The precursor may comprise or consist of polymerizable mono- or oligomers selected from siloxane, e.g. dimethylsiloxane, acrylate, epoxy, urethane, styrene, silicone, olefinic copolymer, e.g. cyclic olefinic copolymer, vinyl ether, or combinations thereof. Particularly preferably, the solid polymer is a polymer selected from (i) the group of elastomers comprising silicone rubber (Q), such as polydimethylsiloxane (PDMS), acrylic rubber (ACM), ethylene acrylic rubber (AEM), nitrile butadiene rubber (NBR), hydrogenated acrylonitrile butadiene rubber (HNBR), epichlorohydrin rubber (ECO); or (ii) the group of thermoplastics comprising polyacrylates, such as polymethyl methacrylate (PMMA), polystyrene (PS), polybutadiene (PB), polypropylene (PP), polyvinyl chloride (PVC), polycarbonate (PC), polybutylene terephthalate (PBT), polyethylene terephthalate (PET), cyclo olefin polymers (COP), cyclo olefin copolymers (COC), acrylonitrile butadiene styrene (ABS), polyimide (PI), polyetherimide (PEI), polysulfone (PSU); or mixtures thereof.

Generally, the fluid precursor of the solid polymeric matrix may be a combination of monomers, oligomers and (pre-)polymers of different chemical nature. The fluid precursors may be in combination with catalysts and other additives such as a photoactivator or photopolymerization initiator. Examples of a photopolymerization initiator include acetophenones, benzophenones, alpha-amyloxime ester, tetramethyl-thiurum monosulfide, and thioxanthones. Further, n-butylamine, triethylamine and poly-n-butylphosphine may be mixedly used as photosensitizer.

The metal halide may be in a composite or polymer as described in WO 2022/157279 A1 or in WO 2019/195517 A1 (all incorporated herein by reference).

Preferably, the solid polymeric matrix is transparent. This signifies that the polymer allows light to pass through the material without significant scattering even at a thickness of the polymer of at least 1 mm, so that at least 80% of the light emitted by the metal halide scintillator is transmitted. Preferably, the solid polymeric matrix is of a material that has a light transmission of at least 80% through a 1 mm thick sheet of the polymer. The light transmission shall be at the emission peak of the metal halide scintillator in the visible or infrared spectrum, preferably at a wavelength of 300 nm to 1200 nm, preferably of 350 nm to 1000 nm, more preferred of 400 nm to 800 nm, especially preferred of 420 nm to 700 nm.

Preferably, the composite fills an inner volume of a microchannel by at least 80 vol%, preferably at least 85 vol%, especially preferred at least 90 vol%, even more preferred at least 95 vol%, in particular preferred at least 98 vol%. The inner volume may be bordered by walls on the sides extending along the lengths and flush (open) areas at the ends of the microchannels.

The metal halide absorbs radiation, e.g. ionizing radiation, and emits electromagnetic radiation. Alternatively, the composite may comprise a radiation absorbing agent. This agent excites the metal halide when absorbing radiation. The metal halide in turn emits electromagnetic radiation, which may be detected.

Preferably, the microchannels comprise walls that absorb or reflect emitted light of the metal halide scintillator. Suitable materials may be used in the walls or as wall coating for absorbing or reflecting emitted light of the metal halide scintillator.

Preferably, the microchannels comprise walls that absorb x-rays. Suitable materials may be used in the walls or as wall coating for absorbing x-rays.

Example materials of the support and/or walls are: glass, plastic, metal and metal oxide. Possible x-ray absorbing materials are selected from plastic, preferably comprising moieties selected from the group of acrylates (e.g. polyesters of acryl), epoxies (polyepoxides), urethanes, styrenes, silicones and cyclic olefinic copolymers. Further x-ray absorbing materials comprise elements with high atomic number of more than 50 and/or visible light absorbing materials. Metal and metal oxide is preferably selected from titanium(oxide) or aluminium(oxide), without being limited to these. An example for light absorbing materials is titanium carbide. Examples of light reflective materials are metallic aluminium, titanium, silver, tungsten, PTFE (polytetrafluoroethylene) polymer, without being limited to these materials.

The walls may comprise one or more coatings for the absorption or reflection of emitted light and/or for the absorption of x-ray radiation. Such a coating, preferably an inner coating facing the microchannel, especially in case of a reflecting coating, may have a thickness 5 nm to 10 mm (single layer or multiple layers for the coating), preferably a thickness of 10 nm to 100 pm, even more preferred 50 nm to 10 µm.

In preferred embodiments, a side of the support, in which the microchannels have their ends, may be coated with an absorbing or reflecting layer for the emitted light of the metal halide scintillator - similar to the materials of the walls for absorbing or reflecting emitted light. This coating on the support side may be added after filling the microchannels with the composite.

The present invention further provides a radiation detection device comprising a scintillation device according to the invention and an electromagnetic radiation detector for detecting emitted electromagnetic radiation of the metal halide scintillator of the scintillation device. The electromagnetic radiation detector shall have a light transmitting connection (operative connection) to the scintillation device, in particular the metal halide scintillator, so that its emitted radiation can reach the detector. The connection may be a simple nearby location without obstruction, such as placing the detector on a side of the scintillation device or its support. The side shall face the endings of the microchannel. The microchannels preferably correspond to individual detection units of the detector, such as pixels. There may be overlapping microchannels and detection units, such as multiple microchannels per detection unit or multiple detection units per microchannel. The connection may also be via glass, glass fibers, fiber optics, mirror, optical glue or a direct light connection.

The electromagnetic radiation detector may be a photomultiplier tube (PMT) detector, thin film transistor (TFT) photodiode sensor, CCD sensor, a complementary metal oxide semiconductor (CMOS) sensor, or an indium gallium zinc oxide (IGZO), TFT sensor, and even more preferred a digital camera.

The radiation detection device may be provided in a radiation emission and detection system, comprising a radiation source and the inventive radiation detection device for detecting the radiation emitted by the radiation source. The radiation source shall be a source for radiation that is absorbed by the metal halide scintillator or another radiation absorbing agent in the composite so that the metal halide scintillator is excited to emit electromagnetic radiation, which in turn is detected by the detector. The radiation source may emit charged particles or high-energy photons (e.g. X-ray, gamma ray, UV light) with a wavelength of less than 600 nm, preferably less than 450 nm, especially preferred less than 380 nm, or less than 350 nm. The radiation source may be placed on a side of the support that comprises microchannel ends, preferably this is a side opposite to a side on which the detector is operatively connected to. Between the support and the radiation source there may be a sample space, i.e. a space in which a sample to be irradiated and measures is placed.

The invention also comprises using the inventive scintillation device. E.g. provided is a method of generating electromagnetic radiation comprising providing a scintillation device of the invention, exciting the metal halide scintillator of the scintillation device to emit electromagnetic radiation. Exciting the metal halide scintillator of the scintillation device to emit electromagnetic radiation may be with emit charged particles or high-energy photons mentioned above, e.g. from said radiation source. Also provided is a method of detecting radiation comprising providing a radiation detection device according to the invention, exciting the metal halide scintillator of the scintillation device to emit electromagnetic radiation, wherein exciting is with a radiation that is to be detected, and detecting the emitted electromagnetic radiation with the detector. Detection can be with the electromagnetic radiation detector mentioned above. The detector may be connected to the scintillation device as mentioned above.

The invention further provides a method of manufacturing a scintillation device according to the invention, comprising preparing a fluid mixture comprising a metal halide scintillator dispersed in a fluid polymer, fluid pre-polymer and/or fluid polymerizable monomers, filling said fluid mixture into microchannels of a support, and solidifying the fluid mixture in said microchannels.

Solidifying may comprise curing, crosslinking, and/or hardening of the fluid polymer, fluid pre-polymer and/or fluid polymerizable monomers. These terms define the formation of covalent bonds to generate a three-dimensional polymer network by forming covalent bonds between linear polymer chains (i.e. thermoplastics) or between multifunctional pre-polymers. Crosslinking may be carried out for example upon heating or by means of radiation, for example with UV light, gamma rays or X-rays, preferably in the presence of a hardener (also referred to as crosslinker, curative or curing agent) and/or a photo initiator. Solidifying forms the solid polymeric matrix as mentioned above and herein. The metal halide scintillator shall be dispersed in the fluid mixture and after solidifying also in the composite with the solid polymeric matrix.

The temperature of the fluid mixture during filling is preferably below 150°C, especially preferred below 100°C, more preferred below 75°C. The temperature may be room temperature. Such low temperature benefit handling (especially compared with prior art filling temperatures of 300°C-500°C) and also improve product quality as shrinkage is reduced and the filling factor is increased. Also, the method is gentler on the metal halide scintillator and support.

The inventive method uses a fluid mixture (precursor to the composite with the scintillator) to fill in the cavities of the microchannels or micro-pores. The invention avoids the need for several filling steps that are needed with solvent deposition methods that require multiple steps to fill the cavities. Hence the inventive method can be done much faster to obtain the final product.

The fluid mixture is introduced into the microchannels for filling. Preferably, the microchannels of the plurality are completely filled. This may be controlled by letting parts of the fluid mixture exit on opposing ends (opposing to the end used to introduce the fluid mixture). Exited fluid mixture may be removed. Alternatively, the corresponding exited solid polymeric matrix may be removed after solidifying.

This innovation provides several advantages over the current state-of-the-art scintillator devices. In particular, it is possible to provide a metal halide scintillator composite with high loading (e.g. 95 wt%) to fill a micro-pore array template comprising of open microchannels. Metal halides scintillators are an excellent alternative to existing scintillators. Previous technologies for high-resolution x-ray imaging with CsI(Tl) rely on scintillation from expensive inorganic crystals grown at high-temperature, which so far has limited the development of large-area scintillator screens. Additionally, in the case of Gadox scintillators for high resolution, they are usually thin and have high afterglow which hinders their fast-imaging application. On the contrary, metal halides can be synthesized and processed according to the invention even at room temperature, and their synthesis is easily scalable so that their production cost is lower. In addition, they are endowed with smaller afterglow, and their optical properties such as emission wavelength, and Stokes shift (namely the difference between the wavelengths of the maximum of the lowest energy absorption peak and the maximum of the highest energy emission peak), can be tuned. For these reasons, the present invention allows the quick production of high-performance, low-cost, large-area radiation detection systems.

The composite has a polymer matrix that is transparent to the scintillation light (emitted light of the scintillator). This polymer matrix acts as a binder for scintillator particles, facilitating the filling of the pores even at room temperature. The open channels ensure a more efficient filling of the cavities, minimizing any issues stemming from the wettability of the pores and trapped air, in contrast to what happens when using templates with wells. In this way, the use of additional solvent may be avoided, decreasing the time needed to fill the microchannels/pores, and higher thicknesses can be achieved. Should a higher light output be desired, it is possible to increase the thickness of the micro-pore array template to have more scintillating materials / increase the length of the microchannels and the composite therein. E.g. scalability is easily achievable from few microns to some millimeters, an advantage that is not easily accessible with previous melting or solvent methods.

Throughout the present disclosure, the articles "a", "an", and "the" are used herein to refer to one or more than one (i.e., to at least one) of the grammatical object of the article.

As used herein, words of approximation such as, without limitation, "about", "substantial" or "substantially" refer to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skill in the art recognize the modified feature as still having the required characteristics and capabilities of the unmodified feature. In general, but subject to the preceding discussion, a numerical value herein that is modified by a word of approximation such as "about" may vary from the stated value by e.g. ±10%.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The "comprising" expressions when used on an element in combination with a numerical range of a certain value of that element means that the element is limited to that range while "comprising" still relates to the optional presence of other elements. E.g. the element with a range may be subject to an implicit proviso excluding the presence of that element in an amount outside of that range. As used herein, the phrase "consisting essentially of" requires the specified integer(s) or steps as well as those that do not materially affect the character or function of the claimed invention. As used herein, the closed term "consisting" is used to indicate the presence of the recited elements only.

The present invention is further illustrated by the following examples, without being limited to these embodiments of the invention.

### Examples

**Example 1: MTF (Modulation Transfer Function) calculation.** MTF measurements were performed by using a lead bar Type 18c as a phantom placed between the X-ray source and the scintillators. The MTF was obtained by measuring the detected image contrast at a spatial frequency of 1 line pair per millimeter (lp/mm). The MTF at 1 lp/mm of sample #1 is used as a reference and arbitrarily set to 100%. The MTF at 1 lp/mm of the other samples are reported as relative values concerning the reference.

**Example 2: Brightness measurements.** Brightness values were calculated by measuring the grey values of the background-corrected detected images. The grey value of sample #1 was used as a reference and arbitrarily set to 100%. The brightness values of the other samples were reported as relative values with respect to the reference. The brightness uniformity was calculated as the standard deviation of the grey values of the measured pixels of the image, while the brightness values are the mean values of these measurements. In table 1 brightness uniformity is categorized by their % values according to the following scheme: good (>95%), moderate (95%-85%), bad (<85%).

**Example 3: X-ray Measurements.** X-rays were generated by using a Mini-X2 X-ray tube, with a voltage of 70 keV and a current of 140 mA. The pictures were taken using a PiCamera HQ module. The x-rays source and the camera were at a geometry of 90°, and a mirror was placed in between the X-rays source and the camera, at an angle of 45°. The X-rays source and the samples were placed at a distance of 10 cm, the samples and the mirror were placed at a distance of 20 cm, and the camera and the mirror were placed at a distance of 15 cm.

**Example 4. Synthesis of Cs₃Cu₂I₅ particles.** Cs₃Cu₂I₅ particles were synthesized using a previously reported method [DOI: 10.1002/adom.201901723]. CsI (3 mmol) and CuI (2 mmol) were dissolved into Dimethylformamide (DMF) (4 mL) and stirred for 3 h at room temperature to form a precursor solution. 1 mL precursor solution was swiftly injected into 10 mL toluene under vigorous stirring. Immediately, white precipitates were formed in the mixed solution. The precipitated particles were separated by centrifuging at 8000 rpm for 10 min and washed with 5 mL 2-propanol two times. Finally, the resulting Cs₃Cu₂I₅ polycrystalline powders were dried at 60 °C under the vacuum for 12 hours.

**Example 5. Synthesis of Tl-doped Cs₃Cu₂I₅ particles.** Tl-doped Cs₃Cu₂I₅ particles were synthesized following a previously reported method [DOI:10.1021/acs.jpclett.2c00456]. 3.115 g CsI, 1.524 g CuI, 0.01 g TlI, 100 µL H₃PO₂, and 20 mL of DMF were stirred at 80 °C for 1 h and then collected as precursor solution. Then, the precursor solution was continuously added drop by drop to 20 mL toluene solution under vigorous stirring. Finally, the particles were centrifuged at 10000 rpm for 5 min, the supernatant was discarded and the precipitated particles were vacuum-dried at 30 °C for 12 h.

**Example 6: Scintillator particles with fluid polymer precursor.** Cs₃Cu₂I₅ particles obtained from example 4 were ground into fine powder in an agate mortar and 0.85 g of the powder was mixed with 0.15 g of a UV curable resin (isobornyl acrylate; (1-methyl-1,2-ethanediyl)bis[oxy(methyl-2,1-ethanediyl)]diacrylate; 2-hydroxyethyl acrylate; dipenyl-2,4,6-trimethylbenzoyl phosphine oxide; i.e. an acrylic resin precursor including photoinitiator), under vigorous stirring to form an 85wt% resin.

**Example 7: Tl-doped Scintillator particles with fluid polymer precursor.** Tl-doped Cs₃Cu₂I₅ crystals obtained from example 5 were ground into fine powder in an agate mortar, and 0.85 g of the powder was mixed with 0.15 g of a UV curable resin (as in Example 6) under vigorous stirring to form 85wt% resin. To compare the effect of the pixelation on the resolution and brightness of the scintillator screens, different templated screens filled with doped and non-doped Cs₃Cu₂I₅ were prepared. The results are shown in Table 1.

**Example 8: Supported scintillator screen.** A porous glass with a surface of 5 × 5 cm², a thickness of 1 mm, a pore diameter of 10 pm, and an open area ratio of 75% was used as screen (or plate) template. The pores form microchannels with a length corresponding to the thickness of the support template and a width corresponding to the pore diameter. The microchannels were filled by the various methods as described for the following samples (comparative methods: precursor solution method, samples #1 and #2; melt method, samples #3 and #7; solvent method, samples #5 and #6; inventive composite method: samples #4, #8 to #10) .

**Sample #1** (comparative example). The first sample was prepared by forming the particles from a salt stock solution (CsI 0.6 M, CuI 0.4 M) in DMF in the cavities of the templated screen by slow evaporation of DMF for one week at room temperature. This sample showed good brightness which is due to the formation of large crystals and lower particle boundaries that lead to lower light scattering and the sample showed very good brightness uniformity as the standard deviation of the grey value was <5% (uniformity>95%). This sample was used as the reference to compare the brightness and the resolution of other films.

**Sample #2** (comparative example). The second sample was prepared by filling the cavities of the templated screen with an (0.1 mg/ml) suspension of the Cs₃Cu₂I₅ (prepared as in example 4) in cyclohexanol in several steps followed by removing the solvent within a few minutes at 70°C. This sample showed lower brightness compared to the reference sample due to the lower filling factor despite multiple filling steps and scattering of light inside the channels.

**Sample #3** (comparative example). The third sample was prepared by filling the template with the melted Cs₃Cu₂I₅ (prepared as in example 1) at 410 °C within two hours followed by cooling to room temperature within several hours. The filling method for this sample was not efficient and the brightness of the film was not uniform across the screen.

**Sample #4.** An inventive sample was prepared by filling the cavities with the 85wt% Cs₃Cu₂I₅ loaded resin (prepared as in example 6). The resin was deposited gently on the templated plate until the excess resin exited from the other side of the template. After removing the resin excess from the surfaces of the templated plate, the resin in the plate was cured using a 365 nm UV light. The prepared sample was 18% dimmer than the reference, which could be due to the scattering of the light inside the channels. Despite the thickness of the resin is 1 millimeter, the resin filled the channel completely and homogeneously. Thanks to the even distribution of the resin inside the channel, the resin shows very good brightness uniformity. Compared to sample #1, which was prepared within one week, the resin-filled scintillator was prepared in one step within a few minutes.

Another series of templated scintillator screens by filling the cavities was prepared of the templated screen with thallium-doped Cs₃Cu₂I₅ and compared with the non-doped Cs₃Cu₂I₅ samples (#1-4). Tl-doped Cs₃Cu₂I₅ particles are 2-3 times brighter compared to the Cs₃Cu₂I₅ particles. Tl-doped Cs₃Cu₂I₅ particles emit green scintillation light (500 nm) and the Cs₃Cu₂I₅ particles emit deep blue scintillation light (450 nm).

**Sample #5** (comparative example). Attempts to grow Tl-doped Cs₃Cu₂I₅ inside the channels by removing the DMF from the polar stock solution (CsI 0.6 M, CuI 0.4 M, TI 1 mM in DMF) failed. The emission spectrum of the remaining salts in the cavity was similar to the non-doped particles and that is a sign of failure in thallium doping during solvent evaporation.

**Sample #6** (comparative example). The next sample was prepared by filling the cavities of the templated screen with an (0.1 mg/ml) suspension of the thallium-doped Cs₃Cu₂I₅ (prepared as in example 5) in cyclohexanol in several steps followed by removing the solvent within a few minutes at 70 °C. This sample showed the lowest brightness in these series due to the lower filling factor despite multiple filling steps. However, the film showed very good spatial resolution, which was 230% higher than the reference sample (#1). That could be due to the formation of a thinner film inside the channels from the precipitated particles. However, the brightness uniformity of the samples was not among the best samples.

**Sample #7** (comparative example). The next sample was prepared by filling the template with the melted thallium doped Cs₃Cu₂I₅ (prepared as in example 5) at 410 °C within two hours followed by cooling to room temperature within several hours. The filling method for this sample was not efficient and the brightness of the film was low and not uniform across the screen. Because of this, it was not possible to calculate the MTF of the sample.

**Sample #8.** The next inventive sample was prepared by filling the cavities of the templated screen with the 85 wt% thallium-doped Cs₃Cu₂I₅ loaded resin (prepared as in example 4). This sample was 168% brighter than the reference samples and showed the same spatial resolution despite it being prepared within a few minutes with very good filling and particle distribution across the screen.

**Sample #9.** The next inventive sample was prepared by filling the cavities of the templated screen with the 85 wt% thallium-doped Cs₃Cu₂I₅ loaded resin (prepared as in example 7), where the inner walls of the template were coated with a light-absorbing layer (titanium carbide). This coating minimizes the cross-talk between the channels and increases the spatial resolution, which was 255% of the reference. Due to significant light loss inside the channels, the samples were only 14% as bright as the reference.

**Sample #10.** Another inventive sample was prepared by filling the cavities of the templated screen with the 85 wt% thallium-doped Cs₃Cu₂I₅ loaded resin (invention) (prepared as in example 7), where the inner walls of the cavity were coated with a light reflective layer (metallic aluminium). This coating minimizes the cross-talk between the channels and increases the spatial resolution. Due to efficient light scattering on the walls, the sample shows the highest light output (180% of the reference) among Tl-Cs₃Cu₂I₅-filled screens. This sample showed 280% higher spatial resolution compared to the reference sample. That shows the advantage of our method for making templated scintillator screens, which contain more complex metal halide structures.

**Table 1: Sample Results**

| Sample number | Sample description | MTF at 1 lp/mm | Brightness | Brightness uniformity | Preparation condition |
|---|---|---|---|---|---|
| 1 | Cs₃Cu₂I₅ (salts in polar solvent) | 100 | 100 | Good | 1 week, rt (room temperature) |
| 2 | Cs₃Cu₂I₅ (suspension in cyclohexanol) | 74 | 39 | Good | Few hours, rt, multiple steps |
| 3 | Cs₃Cu₂I₅ melt | 54 | 44 | Bad | Few hours, 410°C |
| 4 | Cs₃Cu₂I₅ composite | 82 | 73 | Good | Few minutes, rt, single step |
| 5 | Tl-doped Cs₃Cu₂I₅ (polar solution) | Thallium doping failed | | | 1 week, rt |
| 6 | Tl-doped Cs₃Cu₂I₅ (suspension in cyclohexanol) | 230 | 18 | Moderate | Few hours, rt, multiple steps |
| 7 | Tl-doped Cs₃Cu₂I₅ melt | n.d. | 6 | Bad | Few hours, 410°C |
| 8 | Tl-doped Cs₃Cu₂I₅ composite | 100 | 168 | Good | Few minutes, rt, single step |
| 9 | Tl-doped Cs₃Cu₂I₅ composite (light absorbing coated inner wall) | 255 | 14 | Moderate | Few minutes, rt, single step |
| 10 | Tl-doped Cs₃Cu₂I₅ composite (reflective coated inner wall) | 280 | 180 | Good | Few minutes, rt, single step |

## Claims

1. A scintillation device comprising a support that comprises microchannels and a composite of a metal halide scintillator with a solid polymeric matrix in said microchannels.

2. The scintillation device of claim 1, wherein the metal halide scintillator is in microparticle form and the solid polymeric matrix immobilizes the metal halide scintillator in the microchannels.

3. The scintillation device of claim 1 or 2, wherein the microchannels of the support are substantially parallel to each other.

4. The scintillation device of claim 3, wherein the microchannels have a length in the parallel direction and a width perpendicular to the direction of the length, wherein the length is longer than the width, preferably wherein the length is longer that the width by a factor of at least 2-times, at least 5-times, or at least 10-times.

5. The scintillation device of any one of claims 1 to 4, wherein the metal halide scintillator is selected from a compound of formula (**I**)
AₐM_{b}X_{c} (**I**),
wherein:
**A** represents one or more monovalent cations selected from Cs⁺, Rb⁺, K⁺, Na⁺, Li⁺, Tl⁺, ammonium, methylammonium, formamidinium, guanidinium, imidazolium, pyridinium, pyrrolidinium, protonated thiourea, or a mixture thereof;
**M** represents one or more metals selected from the group consisting of Pb²⁺, Ge²⁺, Sb²⁺, Te²⁺, Sn²⁺, Bi²⁺, Mn²⁺, Mn⁺, Cu²⁺, Cu⁺, In³⁺, Zn²⁺, Ag⁺, Au⁺' or trivalent or bivalent rare earth ions, preferably of Ce, Tb, Eu, Sm, Yb, Dy, Tm ions; or a mixture thereof;
**X** represents one or more anions selected from the group consisting of F⁻, Cl⁻, Br⁻, I⁻, or a mixture thereof;
**a** is an integer from 1 to 4;
**b** is an integer of 1 or 2;
**c** is an integer from 3 to 9,
preferably the compound is of sub-formula AMX₃ (II), A₃M₂X₅ (III), or A₂MX₃ (IV) or a mixture thereof.

6. The scintillation device of any one of claims 1 to 5, wherein the amount of the metal halide scintillator in the composite is 0.0001 wt% to 95 wt%, preferably 30 wt% to 92 wt%.

7. The scintillation device of any one of claims 1 to 6, wherein the solid polymeric matrix is a thermoplastic polymer, thermoset polymer, elastomer polymer or resin.

8. The scintillation device of any one of claims 1 to 7, wherein the metal halide scintillator emits radioluminescence from 300 nm to 1200 nm, preferably between 400 nm and 700 nm.

9. The scintillation device of any one of claims 1 to 8, wherein the support comprises a wall grid that forms the microchannels; and/or wherein the microchannels have a cylindrical or prismatic shape.

10. The scintillation device of any one of claims 1 to 9, wherein the microchannels have a length of 50 µm to 20 cm, preferably 100 µm to 1 mm; an/or have a width of 1 µm to 50 mm, preferably 5 µm to 300 µm.

11. The scintillation device of any one of claims 1 to 10, wherein the microchannels comprise light absorbing or light reflecting walls that absorb or reflect emitted light of the metal halide scintillator; and/or comprise x-ray absorbing walls that absorb x-rays.

12. A radiation detection device comprising a scintillation device according to any one of claims 1 to 11 and an electromagnetic radiation detector for detecting emitted electromagnetic radiation of the metal halide scintillator of the scintillation device.

13. A method of manufacturing a scintillation device according to any one of claims 1 to 11, comprising preparing a fluid mixture comprising a metal halide scintillator dispersed in a fluid polymer, fluid pre-polymer and/or fluid polymerizable monomers, filling said fluid mixture into microchannels of a support, and solidifying the fluid mixture in said microchannels.

14. A method of generating electromagnetic radiation comprising providing a scintillation device of any one of claims 1 to 11, exciting the metal halide scintillator of the scintillation device to emit electromagnetic radiation.

15. A method of detecting radiation comprising providing a radiation detection device according to claim 12, exciting the metal halide scintillator of the scintillation device to emit electromagnetic radiation, wherein exciting is with a radiation that is to be detected, and detecting the emitted electromagnetic radiation with the detector.
